# EUROPEAN PATENT APPLICATION

(11) **EP 1 738 972 A1**
(43) Date of publication of application: **03.01.2007**
(21) Application number: 06012231.4
(22) Date of filing: 14.06.2006
(51) Int. Cl.: B60R 21/264

(54) **"Single stage airbag infaltor"**

(30) Priority: 01.07.2005 US 171688
(71) Applicant: KEY SAFETY SYSTEMS, INC., Sterling Heights, MI 48314 (US)
(72) Inventor: Wall, Andrew P., Lakeland, Florida 33810 (US); Hosey, Edward O., Lakeland, Florida 33813 (US); Curtis, Anthony J., Palm Harbor, Florida 34684 (US); Kelley, Michael E., Valrico, Florida 33595 (US); Adams, John H., Lakeland, Florida 33813 (US)
(74) Representative: Gislon, Gabriele

(57) **Abstract**

A single stage inflator (10) has a disk shaped inflator housing (11) and a single initiator (42), such as squib, located in an initiator housing (41). The initiator housing (41) is offset relative to the centerline of the disk shaped inflator housing (11).

## Description

The present invention relates to a single stage airbag inflator. An airbag inflator has a gas generant that when ignited rapidly generates a large but controlled release of hot gases to fill the airbag.

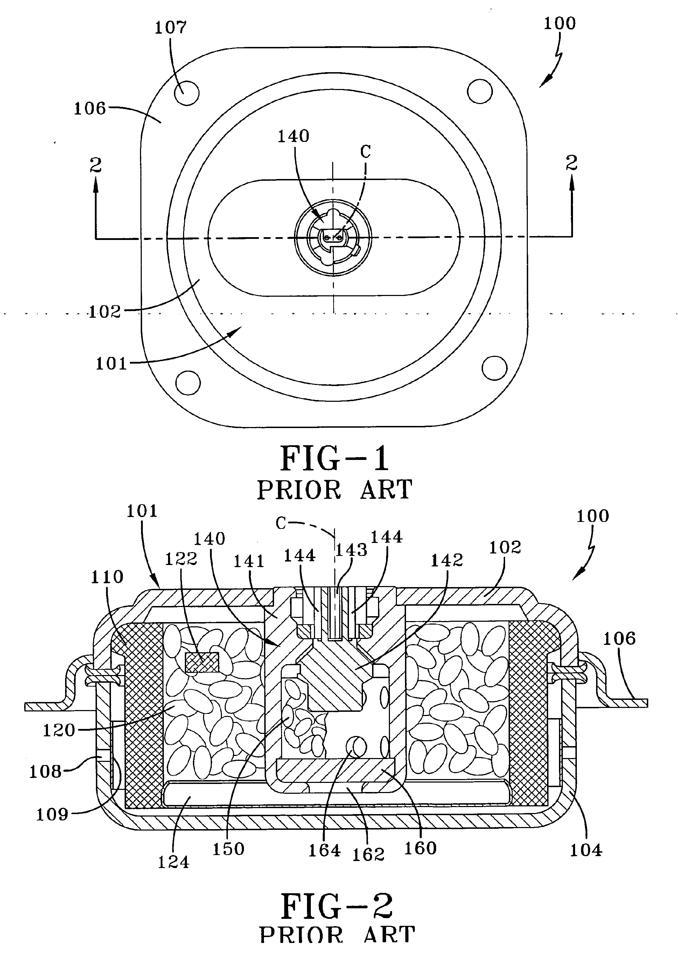

Fig. 1 shows a typical prior art single stage airbag inflator has an initiator that is typically a squib encased in an initiator housing filled with a booster charge. When the initiator is activated it ignites an enhancer charge in the initiator housing. The enhancer charge generates hot particles and gases that ignite the gas generant within the disk shaped housing. This prior art device is centrally and symmetrically charged. The initiator is centered in the centerline of the housing and the gas generant surrounds the initiator housing and can be easily ignited uniformly and thus burns radially outwardly with a neutral or almost neutral thrust. One such device is disclosed in US 6 796 579 B1.

More commonly used, but more complex, is a dual stage airbag inflator. Dual stage inflators require two initiators and separate enhancer and gas generant chambers. The initiators can be fired one first then the second after a delay or may only fire one initiator not firing the second initiator at all or both initiators can be fired simultaneously. One such device is disclosed in US 6 648 370 B1.

A dual stage inflator is more complex and costly than a single stage inflator. A dual stage inflator typically requires a larger enhancer charge to permit the deployment sequence to perform adequately in a sequential fashion with sufficient dwell time during deployment. Single stage inflators are far simpler in design based on fewer components and a simpler firing initiation. Dual stage inflators offer a variable range of protection to passengers, which a single stage inflator cannot provide. The use of single stage inflators is far from simple in design complexity when factored into the various requirements of passenger protection. The use of single stage inflators has been decreasing in spite of the benefits of cost, reliability and simplicity.

A related consideration is that assembly lines building dual stage inflators are not readily compatible with the equipment used in making single stage inflators. A large capital investment is required for two separate production lines, one for single stage inflators and a separate line for dual stage inflators.

The present invention provides a single stage inflator with one initiator having a single initiator, such as a squib, located in an initiator housing, the initiator housing being offset relative to the centerline of the disk shaped inflator housing. The design can be compatible with an automated dual stage inflator production line, greatly reducing the required capital cost for a second redundant assembly line.
Fig. 1 is a bottom plan view of a prior art single stage disk shaped inflator.
Fig. 2 is a cross sectional view of the inflator of Fig. 1 along line 2-2.
Fig. 3 is a bottom plan view of the new single stage inflator.
Fig. 4 is a cross sectional view of the inflator of Fig. 3 along line 4-4.
Fig. 5 is a graph of Pressure versus Time of a first generant charge.
Fig. 6 is a graph of Pressure versus Time of a second generant charge.

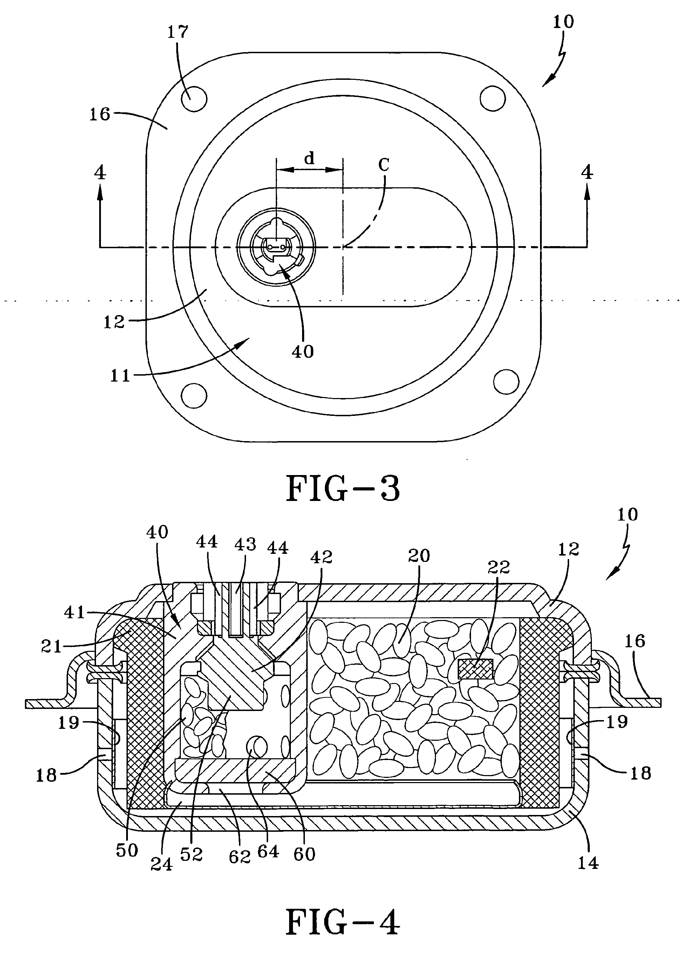

Figs. 1 and 2 show a prior art single stage disk shaped airbag inflator 100 having a single centrally located initiator housing assembly 140. The inflator 100 has a housing 101 having a top portion 104 and a bottom portion 102 welded or otherwise joined together. Encircling the two portions 102, 104 of the housing 101 is a mounting flange 106 having a plurality of mounting holes 107 for attaching the inflator 100. As shown, these disk shaped inflators 100 are commonly attached to an airbag module (not Illustrated) for location in a steering wheel.

The top portion 104 of the housing 101 has a plurality of gas vent holes 108 covered or sealed by a foil type burst tape. A cylindrically shaped annular filter 110 of wire mesh or similar material is shown extending from the top portion 104 of the housing 101 to the bottom portion 102 of the housing 101. The filter 110 blocks burning particles from passing through the vent opening 108 when the inflator gas generant is ignited. A seal 124 is positioned internal to the annular filter 110 upon which gas generant pellets 120 are located along with autoignition pellet 122. In a central location of the bottom portion 102 of the housing 101 is an initiator housing assembly 140. The initiator housing assembly 140 has a single initiator 142, here a squib, with projecting electrical connectors 143, 144 adapted to connect to a wiring connector (not illustrated). The initiator 142 has an explosive charge encapsulated in one end surrounded by an enhancer charge 150 comprising small pellets 152. When activated the initiator 142 ignites causing the enhancer charge 150 to ignite which in turn causes a pressure rise internal to the initiator housing 141 forcing hot particles and expanding gases through small openings 164 thereby igniting the generant pellets 120 and autoignition pellet 122. This creates a further rise in pressure causing the foil 109 to burst and gases to fill the airbag (not shown) upon deployment. The initiator housing 141 has an opening 162 sealed by an end plate 160. Although the autoignition pellet is not needed for a normal deployment, it is consumed during deployment. In the event that the inflator is heated by an outside source, the autoignition pellet will begin to burn at a predetermined level, causing the inflator to deploy without structural failure.

Figs. 3 and 4, a single stage disk shaped inflator 10 according to the present invention having a single offset located initiator is illustrated. The inflator 10 as shown has a disc shaped housing 11 having a top portion 14 and a bottom portion 12 welded or otherwise joined together. Encircling the two portions 12, 14 of the housing 11 is a mounting flange 16 having a plurality of mounting holes 17 for attaching the inflator 10. This disk shaped inflator 10 can be attached to an airbag module (not illustrated) for location in a steering wheel.

On the top portion 14 of the housing 11 is shown a plurality of gas vent holes 18 covered or sealed by a foil type burst tape 19. An annular filter 21 of wire mesh or similar material is shown extending from the top portion 14 of the housing 11 to the bottom portion 12 of the housing 11. The annular filter 21 blocks burning particles from passing through the vent opening 18 when the inflator gas generant is ignited. A seal 24 is positioned internal to the annular filter 21 upon which gas generant pellets 20 are located along with an autoignition compound 22 that may be a pellet. In an offset location of the bottom portion 12 of the housing 11 is an initiator housing assembly 40. The initiator housing assembly 40 has an initiator housing 41 with a single initiator 42, such as a squib, with projecting electrical connectors 43, 44 adapted to connect to a wiring connector (not illustrated). The initiator 42 has an explosive charge encapsulated in one end surrounded by an enhancer charge 50 comprising small pellets. When activated the initiator 42 ignites causing the enhancer charge 50 inside the initiator housing 41 to ignite which in turn causes a pressure rise internal to the initiator housing 41 forcing hot particles and expanding gases through the small openings 64 in the initiator housing 41 thereby igniting the generant pellets 20 and autoignition pellet 22. This creates a further rise in pressure causing the foil 19 to burst and gases to fill the airbag (not shown) upon deployment in a single stage fashion. The housing 41 has an end opening 62 sealed by an end plate 60. Although the autoignition pellet is not needed for a normal deployment, it is consumed during deployment. In the event that the inflator is heated by an outside source, the autoignition pellet will begin to burn at a predetermined temperature, causing the inflator to deploy without structural failure.

Referring to Fig. 3, an inflator 10 was constructed of steel. The generant pellets 20 are preferably made of a non-azide gas generant. Representative gas generant compositions useful in the inventive inflator housing include fuels such as aminotetrazoles, tetrazoles, bitetrazoles, triazoles, the metal salts thereof, guanidine nitrate, nitroguanidine, aminoguanidine nitrate and mixtures thereof; in combination with an oxidizer such as the alkali and alkaline earth or transition metal nitrates, chlorates, perchlorates, ammonium nitrate and mixtures thereof. A preferred gas generant comprises a mixture of nitroguanidine with strontium and potassium nitrates. Typically, the gas generant or gas producing material can comprise about 15 to about 70 weight % fuel, about 2 to about 80 weight % oxidizer and about 1 to about 30 weight % other materials, such as coolants, catalysts, binding agents and processing aids. The gas generant can be formed into various shapes using various techniques known to those skilled in the art.

It is desirable to pelletize the gas generant composition. To do so, up to about 5.0 weight %, typically 0.2 - 5 weight % of a pressing aid or binder may be employed. These may be selected from materials known to be useful for this purpose and include molybdenum disulfide, graphite, elastomers, polyesters, boron nitride, silicon dioxide, talc, calcium stearate and clays.

The gas generant composition may optionally contain a catalyst at up to about 3 weight %, typically between about 1 and about 2 weight %. Cupric oxide is a representative combustion catalyst.

The initiator housing 41 has the plurality of vent holes or openings 64 oriented to direct exhaust into the gas generant pellets 20 with a strong but directional thrust. The openings 64 are located less than 270 degrees, preferably less than 180 degrees around the periphery of the initiator housing 41 in the direction of the gas generant pellets 20 as shown. To compensate for this strong directional thrust, the holes 18 on the inflator housing top portion 14 of the housing 11 are radially oriented about 360° in a spaced pattern and as these gases move radially outwardly the overall thrust becomes almost thrust neutral with an almost immeasurable thrust bias opposite the initiator housing 41.

In Fig. 3 the offset single stage disk shaped inflator 10 is shown having the initiator housing assembly 40 spaced a distance (d) from a center location (C) of the inflator. The offset displacement is quite unique in that it shifts the initiator 42 from a central firing position to one very close to the annular filter 21. Accordingly the openings 64 are also offset meaning the hot particles and gases spraying through the inflator 10 are directionally oriented. The openings 64 preferably are directed on the portions of the initiator housing 41 exposed to the gas generant pellets 20 and the autoignition pellet 22. In this way the openings 64 of the initiator housing 41 orient the hot particles and gases to facilitate burning of the gas generant pellets 20.

In testing of the inventive inflator 10, it was determined that the enhancer charge should be increased to about 2.0 g, and the initiator charge to be in the range of 180 to 260 mg of zirconium potassium perchlorate (ZPP) for proper performance in terms of airbag deployment. Initiator booster charges in excess of 260 mg were not necessary and in fact could potentially damage the initiator housing by exceeding rated burst pressures of the crimp. Lower amounts of enhancer, below 180 mg, could cause a delay in the gas generant burning and lead to unsatisfactory airbag deployment pressure or fill rates.

Empirical studies show that the size of the pellets of the enhancer could be beneficially altered to increase or improve surface area for rapid burn rates. A pellet of enhancer having a 4 mm diameter and a 1.2 mm length was found to be ideal from a pressure versus time analysis.

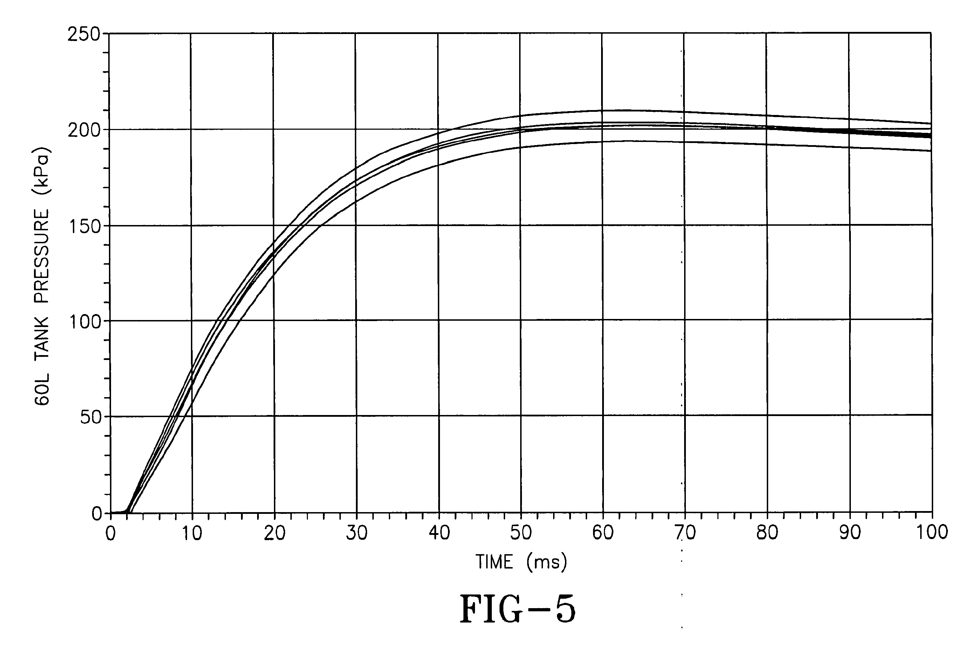

Fig. 5 is a graph of Pressure versus Time for an inflator 10 having a 260 mg initiator booster charge 52, 1.80 g of enhancer pellets 50, and 33.5 g of gas generant pellets 20 of a size 8.0 mm diameter by 1.7 mm length. Each line represents a separate test of an inflator 10.

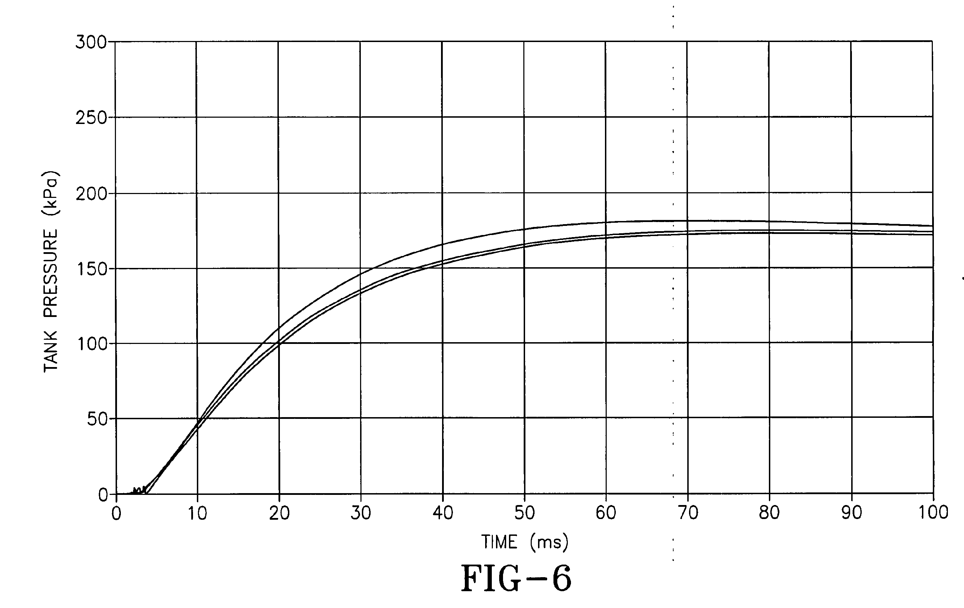

Fig. 6 is a graph of Pressure versus Time using the same proportions by weight, but wherein the 33.5 g of gas generant pellets 20 have of a size 8.0 mm diameter by 2.0 mm length.

From these graphs it was projected that a more preferred gas generant pellet 20 for the offset inflator 10 has a size of 8.0 mm diameter by 2.0 mm length.

For comparison purposes, the dual stage inflator with two initiators uses 180 mg of initiator booster charge and the enhancer charge is 1.1 g in the primary initiator housing and 1.3 g in the secondary initiator housing The present invention uses 180 to 260 mg of initiator booster charge and 2.0 g of enhancer. This represents a 0.4 g reduction in the amount of enhancer. The enhancer pellets 50 are more expensive and burn with more toxicity than the generant pellets 20 so the reduction in enhancer load is an improvement.

Another benefit of the single stage offset design is it has 20% more free volume than the dual stage inflator. The height of the inflator housing could be reduced by at least 10% if further miniaturization is desirable. The new inflator uses an internal spacer of aluminum to occupy the free volume space. The upper and lower housing portions are almost identical to the dual stage housing permitting either style to be used on the same production line.

## Claims

1. A single stage airbag inflator (10) comprising a disk shaped housing (11) with a gas generant (20) and an enhancer (50) disposed inside of the disk shaped housing, and a single initiator housing assembly (40) comprising a single initiator (42), **characterized by** the single initiator (42) of the initiator housing assembly (40) being spaced a distance (d) from a center location (C) of the disk shaped housing (11).

2. A single stage airbag inflator (10) according to claim 1 further comprising an annular fitter (21) located adjacent or in dose proximity to annular sidewalls of the disk shaped housing (11).

3. A single stage airbag inflator (10) according to claim 1 or 2 wherein the single initiator (42) is located adjacent or in close proximity to an inside circumferential portion of the annular filter (21).

4. A single stage airbag inflator (10) according to any of claims 1 - 3 wherein the initiator housing (41) holds the initiator (42) and the enhancer (50).

5. A single stage airbag inflator (10) according to any of claims 1 - 4 wherein the initiator housing (41) has a plurality of vent hole or openings (64) oriented to direct igniter and enhancer exhaust away from the annular filter (21) and into the gas generant (20).

6. A single stage airbag inflator (10) according to any of claims 1 - 5 wherein the enhancer (50) weighs about 2.0 g or less.

7. A single stage airbag inflator (10) according to claim 6 wherein the enhancer (50) is in the form of a pellet having a size of about 4 mm in diameter by about 1.2 mm in length.

8. A single stage airbag inflator (10) according to any of claims 1 - 7 wherein the gas generant (20) is in the form of a pellet having a size of about 8.0 mm in diameter by about 2.0 mm in length.

9. A single stage airbag inflator (10) according to any of claims 1 - 8 further comprising an autoignition compound (22) disposed inside of the disk shaped housing (11).
